(19) Europäisches Patentamt
European Patent Office
Office européen des brevets

(11) **EP 2 289 997 B1**

(12) **EUROPEAN PATENT SPECIFICATION**

(45) Date of publication and mention
of the grant of the patent:
**02.04.2014 Bulletin 2014/14**

(51) Int Cl.:
***C08L 33/06*** (2006.01)      ***C08L 71/02*** (2006.01)

(21) Application number: **09738748.4**

(86) International application number:
**PCT/JP2009/058132**

(22) Date of filing: **24.04.2009**

(87) International publication number:
**WO 2009/133811 (05.11.2009 Gazette 2009/45)**

(54) **ROOM TEMPERATURE-CURABLE COMPOSITION AND CURED PRODUCT THEREOF**

BEI RAUMTEMPERATUR HÄRTBARE ZUSAMMENSETZUNG UND GEHÄRTETES PRODUKT DAVON

COMPOSITION DURCISSABLE À TEMPÉRATURE AMBIANTE ET PRODUIT DURCI LA CONTENANT

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **02.05.2008 JP 2008120612
27.03.2009 JP 2009079573**

(43) Date of publication of application:
**02.03.2011 Bulletin 2011/09**

(73) Proprietor: **KANEKA CORPORATION
Osaka (JP)**

(72) Inventors:
• **HARUMASHI, Tatsuro
Takasago-shi
Hyogo 651-2137 (JP)**
• **ODAKA, Hidetoshi
Takasago-shi
Hyogo 651-2137 (JP)**

• **UEDA, Kazuhiko
Osaka 5308288 (JP)**
• **JONO, Hideharu
Osaka, 5308288 (JP)**

(74) Representative: **Hart-Davis, Jason et al
Cabinet Beau de Loménie
158, rue de l'Université
75340 Paris Cedex 07 (FR)**

(56) References cited:
**JP-A- 2004 002 757      JP-A- 2004 083 606
JP-A- 2004 244 528      JP-A- 2005 082 750
JP-A- 2008 044 975**

Remarks:
The file contains technical information submitted after the application was filed and not included in this specification

**Description**

TECHNICAL FIELD

The present invention relates to a novel acrylic/modified silicone room temperature-curable resin composition that achieves high modulus, high strength, and excellent adhesiveness, and a cured product thereof.

BACKGROUND ART

Room temperature-curable resin compositions that mainly include oxyalkylene polymers each having at least one reactive silyl group (silicon atom-containing group which has a silicon atom bonded to a hydroxy group or a hydrolyzable group and is capable of forming a siloxane bond), especially methyldimethoxysilyl group, per molecule are used for sealants and adhesives for buildings for instance. These compositions are inexpensive and have excellent properties (Patent Document 1). Further, acrylic/modified silicone resin compositions in which the oxyalkylene polymers are blended with acrylic copolymers each having a reactive silyl group are widely available on the market as base polymers for highly weather-resistant sealants and base polymers for one-pack type normal temperature-curable adhesives.

Conventional acrylic/modified silicone resin compositions are widely used as bases for adhesives having excellent adhesiveness and storage stability; however, cured polymers thereof have insufficient hardness.

Polymers having high hardness after curing would be used in industrial applications that require high adhesive strength, but no report has been issued which shows greatly improved effects.

Patent Document 1: JP-B H07-42376

SUMMARY OF THE INVENTION

An object of the present invention is to provide an acrylic/modified silicone resin composition that has high hardness after curing, gives a cured product having good adhesiveness to various substrates, and is usable for industrial applications.

The present inventors have performed various studies in order to solve the above problems, and have found the present invention.

Specifically, the present invention relates to:

(I). a room temperature-curable composition, comprising:

a (meth)acrylate ester polymer (A) having **1.27** or more silicon-containing functional groups of formula (1) on average per molecule and having an alkyl (meth)acrylate ester monomer unit in its molecular chain, the formula (1) being

$$-SiX_3 \qquad (1)$$

wherein X is a hydroxy group or a hydrolyzable group, and each of the three Xs may be the same as or different from each other; and

a polyoxyalkylene polymer (B) having a silicon functional group of formula (2):

$$-Si(R^1_{3-a})Y_a \qquad (2)$$

wherein $R^1$ is a C1-C10 alkyl group, a C6-C10 aryl group, or a C7-C10 aralkyl group; Y is a hydroxy group or a hydrolyzable group; "a" is 1, 2, or 3; and if two or more $R^1$s or Ys are present, each of these may be the same as or different from each other,

the curable composition containing the polymer (A) and the polymer (B) at a weight ratio of 30/70 to 90/10;

(II). the room temperature-curable composition according to (I), wherein the polyoxyalkylene polymer (B) has a number average molecular weight determined by GPC of 5,000 to 500,000;

(III). the room temperature-curable composition according to (I) or (II), wherein "a" of the polyoxyalkylene polymer (B) is 2 or 3;

(IV). the room temperature-curable composition according to (III), wherein X in the formula (1) is a methoxy group and the Y in the formula (2) is a methoxy group;

(V). the room temperature-curable composition according to any one of (I) to (IV), wherein the polyoxyalkylene polymer (B) is a linear polymer, has a number average molecular weight determined by GPC of 21,000 or greater, and has 1.5 or less silicon functional groups with "a" of 3 per molecule;

(VI). the room temperature-curable composition according to any one of (I) to (V), wherein the polyoxyalkylene polymer (B) is obtained by the steps of: reacting a polyoxyalkylene polymer that has an alkenyl group with triethoxysilane; and converting its ethoxy group into a methoxy group;

(VII). the room temperature-curable composition according to any one of (I) to (VI), wherein the (meth)acrylate ester polymer (A) has a number average molecular weight determined by GPC of 500 to 500,000;

(VIII). the room temperature-curable composition according to any one of (I) to (VII), wherein the (meth)acrylate ester polymer (A) has a Tg calculated by the following formula of 20°C to 100°C,

$$1/(Tg(K)) = \Sigma(Mi/Tgi)$$

wherein Mi is a weight fraction of a monomer i that is a structural unit of the polymer; and Tgi is a glass transition temperature (K) of a homopolymer of the monomer i;

(IX). the room temperature-curable composition according to any one of (I) to (VIII), wherein the (meth)acrylate ester polymer (A) is a copolymer of an alkyl (meth)acrylate ester monomer unit (a-1) having a C1-C2 alkyl group and an alkyl (meth)acrylate ester monomer unit (a-2) having a C7-C9 alkyl group at a ratio (a-1/a-2) of 60/40 to 90/10; and

(X). a cured product of the curable composition according to any one of (I) to (IX).

The present invention is capable of providing sealants and adhesives which have high hardness after curing and good adhesiveness to various substrates in general use.

BEST MODE FOR CARRYING OUT THE INVENTION

The following will describe the present invention in detail. A silicon-containing group that has a hydroxy group or hydrolyzable group bonded to a silicon atom and can form a siloxane bond to be cross-linked is also referred to herein as a "reactive silyl group".

The (meth)acrylate ester polymer (A) of the present invention is a polymer having an alkyl acrylate ester monomer unit and/or alkyl methacrylate ester monomer unit with a C1-C20 alkyl group, and also is an acrylic polymer having a reactive silyl group of formula (1) that can form a siloxane bond to be cross-linked. In the present invention, the term "(meth)acrylic acid ((meth)acrylate)" represents acrylic acid (acrylate) and/or methacrylic acid (methacrylate).

$$-SiX_3 \qquad (1)$$

In the formula, X is a hydroxy group or a hydrolyzable group, and each of the three Xs may be the same as or different from each other.

The reactive silyl group of the (meth)acrylate ester polymer (A) is a group that is represented by formula (1), has a hydroxy group or hydrolyzable group bonded to a silicon atom, and can form a siloxane bond by a reaction accelerated by a silanol condensation catalyst so as to be cross-linked.

The hydrolyzable group represented by X in formula (1) is not particularly limited, and may be a conventionally known hydrolyzable group. Specific examples thereof include a hydrogen atom, a halogen atom, an alkoxy group, an acyloxy group, a ketoximate group, an amino group, an amide group, an acid amide group, an aminooxy group, a mercapto group, and an alkenyloxy group. In particular, an alkoxy group is preferable because of its mild hydrolyzability and easy handleability.

Specific examples of the reactive silyl group represented by formula (1) include a trimethoxysilyl group, a triethoxysilyl group, a triisopropoxysilyl group, a methoxydiethoxysilyl group, and an ethoxydimethoxysilyl group. Preferable among these are a trimethoxysilyl group and a triethoxysilyl group, and particularly preferable is a trimethoxysilyl group, because they have high activity and give good curability.

The (meth)acrylate ester polymer (A) preferably has **1.27** to 5.0, and more preferably 2.0 to 3.0, reactive silyl groups per molecule from the viewpoint of higher toughness of the polymer. The number of silyl groups per molecule is calculated from the number average molecular weight determined by GPC and the monomer unit used.

As the alkyl acrylate ester monomer unit used in the present invention, conventional ones can be widely used. Examples thereof include methyl acrylate, ethyl acrylate, n-propyl acrylate, n-butyl acrylate, isobutyl acrylate, tert-butyl acrylate, n-hexyl acrylate, 2-ethylhexyl acrylate, decyl acrylate, undecyl acrylate, lauryl acrylate, tridecyl acrylate, myristyl acrylate, cetyl acrylate, stearyl acrylate, behenyl acrylate, and biphenyl acrylate. As the alkyl methacrylate ester monomer unit, conventional ones can be widely used. Examples thereof include methyl methacrylate, ethyl methacrylate, n-propyl methacrylate, n-butyl methacrylate, isobutyl methacrylate, tert-butyl methacrylate, n-hexyl methacrylate, 2-ethylhexyl methacrylate, decyl methacrylate, undecyl methacrylate, lauryl methacrylate, tridecyl methacrylate, myristyl methacrylate, cetyl methacrylate, stearyl methacrylate, behenyl methacrylate, and biphenyl methacrylate. The (meth)acrylate ester polymer (A) preferably contains 50% by weight or more, and more preferably 70% by weight or more, of the alkyl (meth)acrylate ester monomer unit.

The polymer (A) is preferably an acrylic copolymer whose molecular chain substantially includes: an alkyl acrylate ester monomer unit and/or alkyl methacrylate ester monomer unit (a-1) having a C1-C2 alkyl group; and an alkyl acrylate ester monomer unit and/or alkyl methacrylate ester monomer unit (a-2) having a C7-C9 alkyl group, from the viewpoint of good balance of compatibility with the component (B). The (meth)acrylate ester polymer (A) preferably contains 70% by weight or more of the monomer units (a-1) and (a-2). Although the monomer units (a-1) and (a-2) may be mixed at any ratio, the weight ratio (a-l)/(a-2) is preferably 40/60 to 90/10 for good balance of strength and adhesiveness. The alkyl acrylate ester monomer unit and/or alkyl methacrylate ester monomer unit (a-1) having a C1-C2 alkyl group are/is preferably methyl methacrylate and/or methyl acrylate. The alkyl acrylate ester monomer unit and/or alkyl methacrylate ester monomer unit (a-2) having a C7-C9 alkyl group are/is preferably 2-ethylhexyl acrylate and/or 2-ethylhexyl methacrylate.

In addition to the alkyl acrylate ester monomer unit and/or alkyl methacrylate ester monomer unit, the (meth)acrylate ester polymer (A) may further include a monomer unit copolymerizable with these monomer units. Examples thereof include: acrylic acids such as acrylic acid and methacrylic acid; monomers having an amide group (e.g. acrylamide, methacrylamide, N-methylol acrylamide, and N-methylol methacrylamide), monomers having an epoxy group (e.g. glycidyl acrylate and glycidyl methacrylate), and monomers having an amino group (e.g. diethylaminoethyl acrylate, diethylaminoethyl methacrylate, and aminoethyl vinyl ether); and polyoxyethylene acrylate and polyoxyethylene methacrylate. Polyoxyethylene acrylate and polyoxyethylene methacrylate are expected to show a copolymerization effect in terms of moisture curability and internal curability. Other examples include monomer units derived from acrylonitrile, styrene, $\alpha$-methylstyrene, alkyl vinyl ether, vinyl chloride, vinyl acetate, vinyl propionate, and ethylene.

The monomer composition of the (meth)acrylate ester polymer (A) is generally adjusted by a person skilled in the art depending on its application and purpose. The polymer (A) preferably has a relatively high softening point Tg, as high as 0°C to 200°C, and more preferably as high as 20°C to 100°C, for applications that require high strength. If the softening point is lower than 0°C, the effect of improving the strength is disadvantageously insufficient. The Tg is calculated by the following Fox's formula.

$$\text{Fox's formula: } 1/(Tg(K)) = \Sigma(Mi/Tgi)$$

In the formula, Mi is a weight fraction of a monomer i that is a structural unit of the polymer, and Tgi is a glass transition temperature (K) of a homopolymer of the monomer i. The (meth)acrylate ester polymer (A) may have any main chain structure, and may be a linear or branched polymer.

The (meth)acrylate ester polymer (A) may have any molecular weight. From the viewpoint of easy polymerization, the weight average molecular weight thereof is preferably 500 to 100,000 as determined by GPC and expressed on the polystyrene equivalent basis. Further, it is preferably 1,000 to 30,000 for good balance of strength and viscosity, and is preferably 1,500 to 10,000 for easy handleability such as workability and good adhesiveness.

The (meth)acrylate ester polymer (A) may be produced by a usual vinyl polymerization technique. Examples thereof include, but not particularly limited to, solution polymerization and bulk polymerization utilizing a radical reaction. The reaction is generally performed by mixing the monomers, a radical initiator, a chain transfer agent, a solvent, and the like and then reacting them at 50°C to 150°C.

Examples of the radical initiator include azobisisobutylonitrile and benzoyl peroxide. Examples of the chain transfer agent include mercaptans such as n-dodecyl mercaptan, t-dodecyl mercaptan, and lauryl mercaptan, and halogen-containing compounds. As the solvent, non-reactive solvents such as ethers, hydrocarbons, and esters are preferably used.

A reactive silyl group may be introduced into the (meth)acrylate ester polymer (A) by various methods. Examples of the method include: (I) a method in which a compound having a polymerizable unsaturated bond and a reactive silyl group is allowed to copolymerize with the monomers; (II) a method in which the monomers are allowed to copolymerize in the presence of a mercaptan having a reactive silyl group as a chain transfer agent; and a method as a combination of the methods (I) and (II), in which a compound having a polymerizable unsaturated bond and a reactive silyl group is allowed to copolymerize with the monomers in the presence of a mercaptan having a reactive silyl group as a chain transfer agent.

Examples of the compound having a polymerizable unsaturated bond and a reactive silyl group as described in the method (I) include γ-methacryloxypropyltrimethoxysilane, γ-methacryloxypropyltriethoxysilane, γ-acryloxypropyltrimethoxysilane, γ-acryloxypropyltriethoxysilane, vinyltrimethoxysilane, and vinyltriethoxysilane.

Examples of the mercaptan compound having a reactive silyl group as described in the method (II) include mercapto group-containing silanes such as γ-mercaptopropyltrimethoxysilane.

The component (B) of the present invention is a polyoxyalkylene polymer having a silicon functional group represented by formula (2). The polymer preferably has 0.5 to 3.0 silicon functional groups on average per molecule and preferably has a number average molecular weight determined by GPC of 3,000 to 60,000.

Examples of the oxyalkylene polymer constituting the main polymer chain of the component (B) of the present invention include those represented by formula (3):

$$-(-R^2-O-)_n-\qquad(3)$$

wherein $R^2$ is a C1-C4 bivalent alkylene group. Specific examples include: $-CH_2O-$, $-CH_2CH_2O-$, $-CH_2CH(CH_3)O-$, $-CH_2CH(C_2H_5)O-$, $-CH_2C(CH_3)_2O-$, and $-CH_2CH_2CH_2CH_2O-$. Preferable is an oxypropylene polymer because of its easy availability.

This oxypropylene polymer is preferably a linear polymer for good elongation of a cured product to be provided. The polymer preferably contains 50% by weight or more, and preferably 80% by weight or more, of the monomer unit represented by formula (3) above.

The polymer that is the component (B) of the present invention preferably has a molecular weight of 3,000 to 500,000, and more preferably 5,000 to 40,000 for good workability, and particularly preferably of 10,000 to 35,000. The molecular weight distribution is preferably as low as possible in view of viscosity, and is suitably 1.5 or lower.

The polymer that is the component (B) of the present invention gives rapid curability if containing a silicon functional group of formula (2) with "a" of 3. In this case, preferably, the polyoxyalkylene polymer (B) is a linear polymer, has a number average molecular weight determined by GPC of 21,000 or more, and has 1.5 or less silicon functional groups with "a" of 3 per molecule from the viewpoint of adhesiveness. The number average molecular weight determined by GPC is more preferably 25,000 or more for good adhesiveness.

The component (B) of the present invention may be produced by any conventional method. Examples thereof include a method in which propylene oxide is ring-opening polymerized, in the presence of a catalyst, with a dihydric alcohol or any of various polymers having a hydroxy group, such as ethylene glycol, propylene glycol, butanediol, hexamethylene glycol, methallyl alcohol, hydrogenated bisphenol A, neopentyl glycol, polybutadiene diol, diethylene glycol, triethylene glycol, polyethylene glycol, polypropylene glycol, or dipropylene glycol, as an initiator. This method is preferable for good storage stability of the product.

In order to achieve good properties such as viscosity and adhesiveness, oxyalkylene polymers having a high molecular weight, a narrow molecular weight distribution, and a functional group are advantageous in terms of molecular design in many cases. For example, such polymers may be produced by a special polymerization technique such as a method with a cesium metal catalyst; a porphyrin/aluminum complex catalyst exemplified in JP-A S61-197631, JP-A S61-215622, JP-A S61-215623, and JP-A S61-218632; a double metal cyanide complex catalyst exemplified in JP-B S46-27250 and JP-B S59-15336; or a catalyst containing a polyphosphazene salt exemplified in JP-A H10-273512. The method with a double metal cyanide complex catalyst is preferable from the practical viewpoint.

Examples of the double metal cyanide complex catalyst include $Zn_3[Fe(CN)_6]_2$, $Zn_3[Co(CN)_6]_2$, $Fe[Fe(CN)_6]$, and $Fe[Co(CN)_6]$. More preferably, the catalyst is one having a structure including $Zn_3[Co(CN)_6]_2$ (namely, zinc hexa-cyanocobaltate complex) as a catalytic skeleton and organic ligands coordinated thereto.

Such a catalyst is produced, for example, by reacting a halogenated metal salt with an alkali metal cyanometalate in water to provide a reaction product, and coordinating organic ligands to the obtained reaction product. The metal in the halogenated metal salt is preferably Zn(II) or Fe(II), and particularly preferably Zn(II). The halogenated metal salt is particularly preferably zinc chloride. The metal contained in the cyanometalate of the alkali metal cyanometalate is preferably Co(III) or Fe(III), and particularly preferably Co(III). The alkali metal cyanometalate is preferably potassium hexacyanocobaltate. The organic ligands are preferably alcohols and/or ethers. They preferably include one or more species selected from alcohols such as tert-butyl alcohol, ethanol, sec-butyl alcohol, n-butyl alcohol, isobutyl alcohol, tert-pentyl alcohol, isopentyl alcohol, and isopropyl alcohol; and ethers such as ethylene glycol dimethyl ether (hereinafter, referred to as glyme), diglyme (diethylene glycol dimethyl ether), triglyme (triethylene glycol dimethyl ether), dioxanes, and polyethers having a number average molecular weight of 150 to 5,000. Particularly preferable among these are tert-butyl alcohol and/or glyme.

Any alkylene oxide may be used for producing a polyoxyalkylene polymer as long as it is an alkylene oxide. Examples thereof include ethylene oxide, propylene oxide, 1,2-butylene oxide, 2,3-butylene oxide, isobutylene oxide, epichlorohydrin, epibromohydrin, methyl glycidyl ether, allyl glycidyl ether, butyl glycidyl ether, 2-ethylhexylene glycidyl ether, and trifluoropropylene oxide. Each of these may be used alone or two or more of these may be used in combination. In particular, propylene oxide is preferable because it has good polymerization activity and gives good physical properties to a polymer to be obtained.

The reactive silyl group in the polyoxyalkylene polymer (B) of the present invention is a group that is represented by formula (2), has a hydroxy group or hydrolyzable group bonded to a silicon atom, or a hydrocarbon group, and can form a siloxane bond by a reaction accelerated by a silanol condensation catalyst so as to be cross-linked.

$$-Si(R^1_{3-a})Y_a \qquad (2)$$

wherein $R^1$ is a C1-C10 alkyl group, a C6-C10 aryl group, or a C7-C10 aralkyl group; Y is a hydroxy group or a hydrolyzable group; "a" is 1, 2, or 3; and if two or more $R^1$s or Ys are present, each of these may be the same as or different from each other.

The hydrolyzable group represented by Y in formula (2) is not particularly limited and may be a conventionally known hydrolyzable group. Specific examples thereof include a hydrogen atom, a halogen atom, an alkoxy group, an acyloxy group, a ketoxime group, an amino group, an amide group, an acid amide group, an aminooxy group, a mercapto group, and an alkenyloxy group. Preferable among these is an alkoxy group because of its mild hydrolyzability and easy handleability. In addition, $R^1$ is not particularly limited and may be a conventionally known one as long as it is a C1-C10 alkyl group, a C6-C10 aryl group, or a C7-C10 aralkyl group. It is preferably a methyl group or an ethyl group from the viewpoint of synthesis.

Specific examples of the reactive silyl group of formula (2) include a trimethoxysilyl group, a triethoxysilyl group, a triisopropoxysilyl group, a methoxydiethoxysilyl group, an ethoxydimethoxysilyl group, a methyldimethoxysilyl group, a methyldiethoxysilyl group, an ethyldimethoxysilyl group, and an ethyldiethoxysilyl group. More preferable are a trimethoxysilyl group, a triethoxysilyl group, and a methyldimethoxysilyl group, and particularly preferable are a trimethoxysilyl group and a methyldimethoxysilyl group because these groups have high activity and give good curability. The reactive silyl group-containing oxyalkylene polymer (B) preferably has 1.5 or less silyl groups on average per molecule because if it has too many silyl groups, a cured product to be provided becomes so hard that failure is likely to occur at the interface between the adhesive and a substrate upon breakage, resulting in reduction in the strength of the adhesive. Further, the polymer preferably has 0.5 or more reactive silyl groups on average per molecule from the viewpoint of formation of a cured product.

The reactive silyl group-containing oxyalkylene polymer that is the component (B) of the present invention is preferably produced by introducing a reactive silyl group into a functional group-containing oxyalkylene polymer.

The reactive silyl group may be introduced by a conventionally known method. Examples thereof include the following methods.

(i) An oxyalkylene polymer terminated with a functional group such as a hydroxy group is reacted with an organic compound having an active group showing a reactivity to the functional group and an unsaturated group, or it is copolymerized with an unsaturated group-containing epoxy compound, to provide an unsaturated group-containing oxyalkylene polymer. Then, the obtained reaction product is reacted with a hydrosilane having a reactive silyl group represented by formula (4) to be hydrosilylated.

$$HSi(R^1_{3-a})Y_a \qquad (4)$$

In the formula; $R^1$ is a C1-C10 alkyl group, a C6-C10 aryl group, or a C7-C10 aralkyl group; Y is a hydroxy group or a hydrolyzable group; "a" is 1, 2, or 3; and if two or more $R^1$s or Ys are present, each of these may be the same as or different from each other.

(ii) A polyether polymer having an unsaturated group obtained in the same manner as in the method (i) is reacted with a compound having a mercapto group and a reactive silyl group.

(iii) An oxyalkylene polymer terminated with a functional group (hereinafter, referred to as a Z functional group) such as a hydroxy group, an epoxy group, or an isocyanate group is reacted with a compound having a functional group (hereinafter, referred to as a Z' functional group) showing a reactivity to the Z functional group and a reactive silyl group.

Examples of the reactive silyl group-containing hydrosilane shown in the method (i) include: alkoxysilanes such as trimethoxysilane, triethoxysilane, and methyldimethoxysilane; halogenated silanes such as trichlorosilane; acyloxysilanes such as triacetoxysilane; and alkenyloxysilanes such as triisopropenyloxysilane.

Examples of the compound having a mercapto group and a reactive silyl group used in the method (ii) include mercapto group-containing silanes such as γ-mercaptopropyltrimethoxysilane.

Specific examples of the silicon compound having a Z' functional group used in the method (iii) include, but not limited to: amino group-containing silanes such as γ-(2-aminoethyl)aminopropyltrimethoxysilane and γ-aminopropyltriethoxysilane; epoxysilanes such as γ-glycidoxypropyltrimethoxysilane and β-(3,4-epoxycyclohexyl)ethyltrimethoxysilane; vinyl unsaturated group-containing silanes such as vinyltriethoxysilane and γ-methacryloyloxypropyltrimethoxysilane; chlorine-containing silanes such as γ-chloropropyltrimethoxysilane; and isocyanato-containing silanes such as γ-isocyanatopropyltriethoxysilane and γ-isocyanatopropyltrimethoxysilane.

The reactive silyl group-containing oxyalkylene polymer is particularly preferably a reactive silyl group-containing oxyalkylene polymer that has a trimethoxysilyl group or a methyldimethoxysilyl group as provided by the method (i) in order to achieve good storage stability.

In order to provide the reactive silyl group-containing oxyalkylene polymer that has a trimethoxysilyl group by the method (i), trimethoxysilane may be used; however, trimethoxysilane has a disadvantage in terms of safety. Thus, it is preferable to employ a method in which triethoxysilane that is safer than trimethoxysilane is subjected to the reaction and then mixed with methanol in the presence of a catalyst so that its ethoxy group is converted into a methoxy group.

Generally known catalysts for converting an ethoxy group into a methoxy group include acids, bases, and metal alkoxides. Specific examples thereof include, but not limited to, Bronsted acids such as hydrogen chloride and hydrogen bromide and bases including lower amines such as triethylamine. Preferable are hydrogen halides such as hydrogen chloride and hydrogen bromide, and particularly preferable is hydrogen chloride, because they have high activity and cause less side reactions.

The amount of hydrogen chloride is preferably 1 to 100 ppm, and more preferably 2 to 30 ppm because too much hydrogen chloride causes curing of the polymer during reaction or thickening of the obtained polymer during storage. The amount of methanol may be optionally adjusted depending on the methoxy conversion ratio of the target organic polymer terminated with a trimethoxysilyl group. In other words, a large amount of methanol may provide a trimethoxysilyl group-terminated organic polymer at a high methoxy conversion ratio, and a smaller amount of methanol may provide a trimethoxysilyl group-terminated organic polymer at a lower methoxy conversion ratio. The amount of methanol is not particularly limited. It is preferably 3 to 30 parts, more preferably 5 to 25 parts, and still more preferably 10 to 20 parts, relative to 100 parts by weight of the organic polymer, in consideration of the viscosity during the methoxy conversion reaction, and/or the methanol removal time period after the methoxy conversion, and/or the rate of the methoxy conversion reaction. In addition, the amount of a catalyst used may be adjusted depending on the amount of methanol in order to stabilize the rate of the methoxy conversion reaction and/or suppress an increase in the viscosity of the trimethoxysilyl group-terminated organic polymer during storage.

In the present invention, it is necessary that the catalyst used be removed and/or neutralized after the reaction between the ethoxy group-terminated oxyalkylene polymer and methanol. The residual amount of the catalyst is required to be reduced by removal and/or neutralization because a large amount of the residual catalyst causes poor storage stability.

Specific examples of the method for removing the catalyst from the organic polymer include, but not limited to, volatilization under reduced pressure, and neutralization of the catalyst vaporized by heat into a gas phase as performed in the gas phase.

Specific examples of the method for neutralizing the catalyst include, but not limited to, a reaction with an epoxy compound and a reaction with a base. In the case that the step of producing an organic polymer terminated with a silyl group in which one silicon atom is bonded with three hydrolyzable groups including at least one hydrolyzable group other than a methoxy group and the step of reacting the organic polymer with methanol are carried out in a single reactor, the catalyst is preferably neutralized by reaction with an epoxy compound in order to avoid deactivation of an VIII-family transition metal used for producing the organic polymer terminated with a hydrolyzable group-containing silyl group.

With respect to the ratio between the (meth)acrylate ester polymer (A) and the oxyalkylene polymer (B) in the curable resin composition of the present invention, the weight ratio (A)/(B) is preferably in the range of 30/70 to 60/40 for good compatibility and viscosity, and good strength of a cured product to be provided. The weight ratio is more preferably 40/60 to 50/50.

The curable composition of the present invention is cured with a silanol condensation catalyst that accelerates the reaction of a reactive silyl group. Specific examples of such a curing accelerator include: titanate esters such as tetrabutyl titanate and tetrapropyl titanate; organotin compounds such as dibutyltin dilaurate, dibutyltin maleate, dibutyltin diacetate, tin octylate, tin naphthenate, reaction products of dibutyltin oxide and phthalate esters, and dibutyltin diacetylacetonate; organoaluminum compounds such as aluminum trisacetylacetonate, aluminum trisethylacetoacetate, and diisopropoxy aluminum ethylacetoacetate; reaction products of bismuth salts and organic carboxylic acids such as bismuth-tris(2-ethylhexoate) and bismuth-tris(neodecanoate) ; chelate compounds such as zirconium tetraacetylacetonate and titanium tetraacetylacetonate; organolead compounds such as lead octylate; organovanadium compounds; amine compounds such as butylamine, octylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, 1-phenylguanidine, 1-(o-tolyl)guanidine, diphenylguanidine, 1-phenylbiguanide, 1-(o-tolyl)biguanide, 2,4,6-tris(dimethylaminomethyl)phenol, morpholine, N-methylmorpholine, 2-ethyl-4-methylimidazol, 1,8-diazabicyclo[5.4.0]undecene-7 (DBU), and salts thereof with carboxylic acids or the like; low molecular weight polyamide resins produced from an excessive amount of a polyamine and a polybasic acid; and reaction products of an excessive amount of a polyamine and an epoxy compound. Preferable among these are organotin compounds and amine compounds because of their good balance of curing rate and physical properties. Particularly preferable is dibutyltin dilaurate. Each of these may be used alone or two or more of these may be used in combination.

In general, the amount of the curing accelerator may be adjusted depending on the target applications and properties. It is preferably 0.001 to 20 parts, and more preferably 0.05 to 10 parts, relative to 100 parts by weight in total of the (meth)acrylate ester polymer (A) and the polyoxyalkylene polymer (B).

The curable composition of the present invention may contain a plasticizer if necessary.

The plasticizer is not particularly limited. Examples thereof include phthalate esters such as dibutyl phthalate, diheptyl phthalate, bis(2-ethylhexyl)phthalate, diisodecyl phthalate, diisononyl phthalate, and butylbenzyl phthalate; non-aromatic dibasic acid esters such as dioctyl adipate, dioctyl sebacate, dibutyl sebacate, and isodecyl succinate; aliphatic esters such as butyl oleate and methyl acetyl ricinoleate; phosphate esters such as tricresyl phosphate and tributyl phosphate; trimellitate esters; sulfonate esters such as phenyl pentadecanesulfonate and phenyl hexadecanesulfonate; chlorinated paraffins; hydrocarbon oils such as alkyldiphenyls and partially hydrogenated terphenyls; process oils; and epoxy plasticizers such as epoxidized soy bean oil and benzyl epoxystearate.

Examples of a polymeric plasticizer include: vinyl polymers produced by polymerizing vinyl monomers through various methods; esters of polyalkylene glycols; polyester plasticizers; polyether polyols having a molecular weight of 500 or higher, and further 1000 or higher, such as polypropylene glycol; polystyrenes; polybutadiene; and polybutene. The polymeric plasticizer preferably has a number average molecular weight of 500 to 15,000. The polymeric plasticizer is preferably a reactive silyl group-containing polymeric plasticizer because such a polymeric plasticizer is involved in the curing reaction and is prevented from transferring from a cured product to be provided. Each of these plasticizers may be used alone, or a plurality thereof may be used in combination.

If a plasticizer is added, the amount thereof is preferably 5 to 150 parts by weight, more preferably 10 to 120 parts by weight, and particularly preferably 20 to 100 parts by weight, relative to 100 parts by weight in total of the (meth)acrylate ester polymer (A) and the polyoxyalkylene polymer (B). If the amount is less than 5 parts by weight, the plasticizer is less likely to show its effects; while, if the amount is more than 150 parts by weight, a cured product to be provided is likely to have insufficient mechanical strength.

The curable composition of the present invention may contain a silane coupling agent if necessary. The silane coupling agent is not particularly limited. Examples thereof include: aminosilanes such as γ-aminopropyltrimethoxysilane, γ-aminopropyltriethoxysilane, γ-aminopropyltriisopropoxysilane, γ-aminopropylmethyldimethoxysilane, γ-(2-aminoethyl)aminopropylmethyldimethoxysilane, γ-(2-aminoethyl)aminopropyltriethoxysilane, γ-(2-(2-aminoethyl)aminoethyl)aminopropyltrimethoxysilane, 3-(N-ethylamino)-2-methylpropyltrimethoxysilane, N-cyclohexylaminomethyltriethoxysilane, and N-phenylaminomethyltrimethoxysilane; ketimine silanes such as N-(1,3-dimethylbutylidene)-3-(triethoxysilyl)-1-propaneamine; isocyanatosilanes such as γ-isocyanatopropyltrimethoxysilane and γ-isocyanatopropyltriethoxysilane; mercaptosilanes such as γ-mercaptopropyltrimethoxysilane; epoxysilanes such as γ-glycidoxypropyltrimethoxysilane; carboxysilanes such as β-carboxyethyltriethoxysilane; vinyl unsaturated group-containing silanes such as vinyltrimethoxysilane, vinyltriethoxysilane, and γ-methacryloyloxypropylmethyldimethoxysilane; halogen-containing silanes such as γ-chloropropyltrimethoxysilane; and isocyanurate silanes such as tris(3-trimethoxysilylpropyl)isocyanurate. Further, reaction products of aminosilanes and epoxysilanes as described above and reaction products of aminosilanes and isocyanatosilanes may be also used. If a silane coupling agent is added, the amount thereof is preferably 0.01 to 20 parts by weight relative to 100 parts by weight in total of the (meth)acrylate ester polymer (A) and the polyoxyalkylene polymer (B).

The curable composition of the present invention may contain an epoxy resin, a phenol resin, sulfur, an alkyl titanate, an aromatic polyisocyanate, and the like substances, if necessary, for the adhesiveness-imparting effect. If these resins are added, the amount thereof is preferably 5 parts by weight or less relative to 100 parts by weight in total of the (meth)acrylate ester polymer (A) and the polyoxyalkylene polymer (B).

The curable composition of the present invention may contain a filler if necessary. The filler is not particularly limited. Examples thereof include: reinforcing fillers such as fumed silica, precipitated silica, crystalline silica, fused silica, dolomite, silicic anhydride, hydrous silicic acid, and carbon black; organic powders such as heavy calcium carbonate, colloidal calcium carbonate, magnesium carbonate, diatomite, calcined clay, clay, talc, titanium oxide, bentonite, organic bentonite, ferric oxide, fine aluminum powder, flint powder, zinc oxide, activated zinc white, shirasu balloons, glass microballoons, organic microballoons of phenol resin and vinylidene chloride resin, PVC powder, and PMMA powder; and fibrous fillers such as asbestos, glass fibers, and filaments. If a filler is added, the amount thereof is preferably 1 to 250 parts by weight, and more preferably 10 to 200 parts by weight, relative to 100 parts by weight in total of the (meth) acrylate ester polymer (A) and the polyoxyalkylene polymer (B).

In order to achieve a luxurious appearance, the curable composition of the present invention may contain a scaly or granular substance. The scaly or granular substance is not particularly limited. Examples thereof include one disclosed in JP-A H09-53063. The diameter of the substance is appropriately selected according to the conditions of outer walls such as materials and patterns, and is preferably 0.1 mm or greater. The amount of the scaly or granular substance is preferably 1 to 200 parts by weight relative to 100 parts by weight in total of the (meth)acrylate ester polymer (A) and the polyoxyalkylene polymer (B).

The material of the scaly or granular substance is not particularly limited. Examples thereof include natural materials such as silica sand and mica, synthetic rubbers, synthetic resins, and inorganic materials such as alumina.

For the same purpose, the curable composition may contain balloons (preferably having an average particle size of 0.1 mm or greater).

Also in the case that the curable composition of the present invention contains cured sealant particles, a cured product to be provided is allowed to have improved appearance with a rough surface in terms of design. JP-A 2001-115142 discloses preferable conditions such as diameter, amount, and material of the cured sealant particles.

The curable composition of the present invention may contain a silicate if necessary. The silicate is not particularly limited. Examples thereof include tetraalkoxysilanes and partially hydrolyzed condensation products derived therefrom. Specific examples thereof include tetraalkoxysilanes (tetraalkyl silicates) such as tetramethoxysilane, tetraethoxysilane, and ethoxytrimethoxysilane, and partially hydrolyzed condensation products derived therefrom. If a silicate is added, the amount thereof is preferably 0.1 to 20 parts by weight relative to 100 parts by weight in total of the (meth)acrylate ester polymer (A) and the polyoxyalkylene polymer (B).

The curable composition of the present invention may contain a tackifier if necessary. The tackifier resin is not particularly limited as long as it is commonly used, irrespective of whether it is in a solid or liquid state at normal temperature. Examples thereof include: styrene block copolymers, hydrogenated products thereof, phenolic resins, modified phenolic resins (e.g. cashew oil-modified phenolic resin and tall oil-modified phenolic resin), terpene-phenolic resins, xylene-phenolic resins, cyclopentadiene-phenolic resins, coumarone-indene resins, rosin resins, rosin ester resins, hydrogenated rosin ester resins, xylene resins, low molecular weight polystyrene resins, styrene copolymer resins, petroleum resins (e.g. C5 hydrocarbon resins, C9 hydrocarbon resins, and C5C9 hydrocarbon copolymer resins), hydrogenated petroleum resins, terpene resins, DCPD resins, and petroleum resins. If a tackifier is added, the amount thereof is preferably 5 to 1,000 parts by weight relative to 100 parts by weight in total of the (meth)acrylate ester polymer (A) and the polyoxyalkylene polymer (B).

The curable composition of the present invention may contain a solvent or a diluent if necessary. The solvent or diluent is not particularly limited. Examples thereof include aliphatic hydrocarbons, aromatic hydrocarbons, alicyclic hydrocarbons, halogenated hydrocarbons, alcohols, esters, ketones, and ethers. Each of these may be used alone, or a plurality thereof may be used in combination.

The curable composition of the present invention may contain a physical-property modifier if necessary. The physical-property modifier is not particularly limited. Examples thereof include: alkylalkoxysilanes such as methyltrimethoxysilane and dimethyldimethoxysilane; alkylisopropenoxysilanes such as dimethyldiisopropenoxysilane; functional group-containing alkoxysilanes such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane, and γ-mercaptopropylmethyldimethoxysilane; silicone varnishes; and polysiloxanes.

Preferable among the physical-property modifiers are ones that generate compounds having a monovalent silanol group in the molecule by hydrolysis because such modifiers reduce the modulus of a cured product to be provided without deteriorating the surface stickiness thereof.

The compound that generates a compound having a monovalent silanol group in the molecule by hydrolysis is not particularly limited. Examples thereof include: the compounds disclosed in JP-A H05-117521; compounds derived from alkyl alcohols which generate by hydrolysis an organosilicon compound represented by $R_3SiOH$ such as trimethylsilanol; and the compounds disclosed in JP-A H11-241029 which are derived from polyhydric alcohols having 3 or more hydroxy groups per molecule and generate by hydrolysis an organosilicon compound represented by $R_3SiOH$ such as trimethylsilanol.

In addition, examples thereof include: the compounds disclosed in JP-A H07-258534 which are derived from oxypropylene polymers and generate by hydrolysis an organosilicon compound represented by $R_3SiOH$ such as trimethylsilanol; and the compounds disclosed in JP-A H06-279693 which contain a cross-linkable, hydrolyzable silyl group and a silyl group capable of generating a monovalent silanol group-containing compound by hydrolysis.

If a physical-property modifier is added, the amount thereof is preferably 0.1 to 20 parts by weight relative to 100 parts by weight in total of the (meth)acrylate ester polymer (A) and the polyoxyalkylene polymer (B).

The curable composition of the present invention may contain a thixotropic agent (anti-sagging agent) if necessary. The thixotropic agent is not particularly limited. Examples thereof include polyamide waxes; hydrogenated castor oil derivatives; and metal soaps such as calcium stearate, aluminum stearate, and barium stearate. In addition, examples thereof include powdery rubbers having a particle size of 10 to 500 μm such as ones disclosed in JP-A H11-349916, and organic fibers such as ones disclosed in JP-A 2003-155389. Each of these thixotropic agents (anti-sagging agents) may be used alone, or a plurality thereof may be used in combination. If a thixotropic agent is added, the amount thereof is preferably 0.1 to 20 parts by weight relative to 100 parts by weight in total of the (meth)acrylate ester polymer (A) and the polyoxyalkylene polymer (B).

The curable composition of the present invention may contain a compound having an epoxy group in the molecule if necessary. Addition of the epoxy group-containing compound enhances restorability of a cured product to be provided.

The epoxy group-containing compound is not particularly limited. Examples thereof include epoxidized unsaturated fats and oils; epoxidized unsaturated fatty acid esters; alicyclic epoxy compounds; compounds such as epichlorohydrin derivatives; and mixtures thereof. If an epoxy compound is added, the amount thereof is preferably 50 parts by weight or less relative to 100 parts by weight in total of the (meth)acrylate ester polymer (A) and the polyoxyalkylene polymer (B).

The curable composition of the present invention may contain a photocurable substance if necessary. The photocurable substance is not particularly limited. Examples thereof include conventionally known ones such as organic monomers, oligomers, resins, and compositions containing these substances. Specific examples thereof include unsaturated acrylic compounds, polyvinyl cinnamates, and azidized resins. If a photocurable substance is added, the amount thereof is preferably 0.1 to 20 parts by weight relative to 100 parts by weight in total of the (meth)acrylate ester polymer (A) and the polyoxyalkylene polymer (B).

The curable composition of the present invention may contain an oxygen-curable substance if necessary. The oxygen-curable substance is not particularly limited as long as it is a compound having an unsaturated compound that can react with oxygen in the air. Examples thereof include: drying oils, such as tung oil and linseed oil, and various alkyd resins obtained by modifying the compounds; drying oil-modified acrylic polymers, epoxy resins, and silicone resins; liquid polymers such as 1,2-polybutadiene, 1,4-polybutadiene, and polymers of C5-C8 dienes; and liquid copolymers, such as NBR and SBR, obtained by copolymerizing such a diene compound and a vinyl compound copolymerizable with the diene compound, such as acrylonitrile and styrene, such that the diene compound serves as the main component. If an oxygen-curable substance is added, the amount thereof is preferably 0.1 to 20 parts by weight relative to 100 parts by weight in total of the (meth)acrylate ester polymer (A) and the polyoxyalkylene polymer (B).

The curable composition of the present invention may contain an antioxidant if necessary. The antioxidant is not particularly limited. Examples thereof include hindered phenol antioxidants, monophenol antioxidants, bisphenol antioxidants, and polyphenol antioxidants. Preferable among these are hindered phenol antioxidants. Also preferable are hindered amine photostabilizers such as TINUVIN 622LD (Ciba Specialty Chemicals Inc.) and SANOL LS-770 (Sankyo Lifetech Co., Ltd.). JP-A H04-283259 and JP-A H09-194731 also disclose specific examples of the antioxidant. If an antioxidant is added, the amount thereof is 0.1 to 10 parts by weight relative to 100 parts by weight in total of the (meth)acrylate ester polymer (A) and the polyoxyalkylene polymer (B).

The curable composition of the present invention may contain a photostabilizer if necessary. The photostabilizer is not particularly limited. Examples thereof include benzotriazole compounds, hindered amine compounds, and benzoate compounds. Preferable among these are hindered amine photostabilizers. If a photostabilizer is added, the amount thereof is preferably 0.1 to 10 parts by weight relative to 100 parts by weight in total of the (meth)acrylate ester polymer (A) and the polyoxyalkylene polymer (B). JP-A H09-194731 also discloses specific examples of the photostabilizer.

The curable composition of the present invention may contain an ultraviolet absorber if necessary. The ultraviolet absorber is not particularly limited. Examples thereof include benzophenone compounds, benzotriazole compounds, salicylate compounds, substituted tolyl compounds, and metal chelate compounds. If an ultraviolet absorber is added, the amount thereof is preferably 0.1 to 10 parts by weight relative to 100 parts by weight in total of the (meth)acrylate ester polymer (A) and the polyoxyalkylene polymer (B).

The curable composition of the present invention may contain an epoxy resin if necessary. Addition of the epoxy resin improves the adhesiveness of a cured product to be provided, and the epoxy resin-containing curable composition is suitably used as an adhesive, in particular as an adhesive for outer wall tiles.

The epoxy resin is not particularly limited. Examples thereof include epichlorohydrin-bisphenol A type epoxy resins, epichlorohydrin-bisphenol F type epoxy resins, novolac epoxy resins, hydrogenated bisphenol A epoxy resins, various alicyclic epoxy resins, N,N-diglycidylaniline, N,N-diglycidyl-o-toluidine, triglycidyl isocyanurate, polyalkylene glycol diglycidyl ethers, glycidyl ethers of polyhydric alcohols such as glycerin, hydantoin epoxy resins, and epoxidized products of unsaturated polymers such as petroleum resins.

If an epoxy resin is added, the amount thereof depends on applications of the curable composition. For example, in order to improve the properties such as impact resistance, flexibility, toughness, and peeling strength of a cured product of the epoxy resin, it is preferable to add 1 to 100 parts by weight in total of the (meth)acrylate ester polymer (A) and the polyoxyalkylene polymer (B) relative to 100 parts by weight of the epoxy resin; while in order to improve the strength of a cured product of the polymer (A) and the polymer (B), it is preferable to add 1 to 200 parts by weight of the epoxy resin relative to 100 parts by weight in total of the polymer (A) and the polymer (B).

If the curable composition of the present invention contains an epoxy resin, the curable composition preferably further contains a curing agent for an epoxy resin.

The curing agent for an epoxy resin is not particularly limited as long as it is a compound capable of curing an epoxy resin. Examples thereof include: primary and secondary amines such as triethylenetetramine, tetraethylenepentamine, diethylaminopropylamine, N-aminoethylpiperidine, m-xylylenediamine, m-phenylenediamine, diaminodiphenylmethane, diaminodiphenylsulfone, isophoronediamine, and amine-terminated polyethers; tertiary amines such as 2,4,6-tris(dimethylaminomethyl)phenol and tripropylamine, and salts of these tertiary amines; polyamide resins; imidazoles; dicyandiamides; boron trifluoride complex compounds; carboxylic anhydrides such as phthalic anhydride, hexahydrophthalic anhydride, tetrahydrophthalic anhydride, dodecenylsuccinic anhydride, pyromellitic anhydride, and chlorendic anhydride; alcohols; phenols; carboxylic acids; and diketone complex compounds of aluminum or zirconium.

Preferably used among the curing agents for an epoxy resin are ketimine compounds because they provide one-pack type curable compositions. The ketimine compound is stable in the absence of moisture, and on the other hand, is decomposed into a primary amine and a ketone by moisture, and the generated primary amine serves as a curing agent for curing an epoxy resin at room temperature. Examples of the ketimine compound include compounds obtained by condensation reaction between an amine compound and a carbonyl compound.

The curable composition of the present invention may contain various additives other than those mentioned above, if necessary, for the purpose of adjusting the physical properties of the curable composition or a cured product to be provided therefrom. Examples of these additives include: curability modifiers, radical inhibitors, metal deactivators, antiozonants, phosphorus type peroxide decomposers, lubricants, pigments, foaming agents, repellents for ants, and fungicides. Patent Documents such as JP-B H04-69659, JP-B H07-108928, JP-A S63-254149, JP-A S64-22904, and JP-A 2001-72854 disclose specific examples thereof. Each of these additives may be added alone or a plurality thereof may be added in combination.

In the case that the curable composition is of one-pack type, which is prepared by mixing all ingredients in advance, the composition may start to cure during storage if it contains moisture. Thus, it is preferable to dehydrate and dry ingredients containing moisture in advance and then mix the ingredients, or to dehydrate ingredients by pressure reduction or the like operation upon mixing the ingredients.

In the case that the curable composition is of two-pack type, the composition is less likely to start to cure (gelate) even if it contains a little moisture. This is because it is not required to mix a curing catalyst with the base mixture containing an organic polymer having a reactive silyl group. If the composition requires long-term storage stability, it is preferable to carry out dehydration and drying.

The method for dehydration and drying is preferably heat drying or vacuum dehydration if the ingredient is a solid such as powder; and is preferably vacuum dehydration or the dehydration with a synthetic zeolite, activated alumina, silica gel, quick lime, magnesium oxide, or the like if the ingredient is a liquid. In addition, the following dehydration method is also preferable: adding an alkoxysilane compound (e.g. n-propyltrimethoxysilane, vinyltrimethoxysilane, vinylmethyldimethoxysilane, methyl silicate, ethyl silicate, $\gamma$-mercaptopropylmethyldimethoxysilane, $\gamma$-mercaptopropylmethyldiethoxysilane, or $\gamma$-glycidoxypropyltrimethoxysilane), an oxazolidine compound (e.g. 3-ethyl-2-methyl-2-(3-methylbutyl)-1,3-oxazolidine), or an isocyanate compound to the curable composition and thereby reacting the compound with water contained in the composition. As mentioned here, addition of an alkoxysilane compound, an oxazolidine compound, or an isocyanate compound improves the storage stability of the curable composition.

In the case of adding an alkoxysilane compound that can react with water, such as vinyltrimethoxysilane, for drying, the amount thereof is preferably 0.1 to 20 parts by weight relative to 100 parts by weight in total of the (meth)acrylate ester polymer (A) and the polyoxyalkylene polymer (B).

The curable composition of the present invention may be prepared by any method. Examples of the method include conventionally known methods such as a method in which the aforementioned ingredients are mixed and kneaded at normal temperature or under heating with an apparatus such as mixer, roller, or kneader; and a method in which the ingredients are dissolved into a small amount of an appropriate solvent and then mixed.

When exposed to the air, the curable composition of the present invention forms a three-dimensional network structure due to the action of moisture, and thus cures into a solid having rubbery elasticity.

EXAMPLES

The following will describe the present invention in more detail referring to, but not limited to, specific examples below.

In each of the following syntheses, the molecular weight was determined by GPC (polystyrene-equivalent molecular weight, solvent delivery system: HLC-8120GPC by TOSOH Corporation, column: TSK-GEL H type by TOSOH Corporation, solvent: THF). The number of silyl groups was determined from the amount of the silyl groups obtained by $^1$H-NMR (JNM-LA400, JEOL Ltd.). The Tg was calculated by the Fox's formula. The Tg of the homopolymer of each (meth)acrylic monomer used in the calculation is as follows: methyl methacrylate (378 K), 2-ethylhexyl methacrylate (223 K), butyl acrylate (218 K), stearyl methacrylate (208 K), γ-methacryloxypropyltrimethoxysilane (316 K), and γ-methacryloxypropylmethyldimethoxysilane (303 K).

(Synthesis 1)

Methyl methacrylate (300 g), 2-ethylhexyl methacrylate (115 g), γ-methacryloxypropyltrimethoxysilane (46 g), γ-mercaptopropyltrimethoxysilane (37 g), and isobutyl alcohol (IBA, **200** g) were mixed, and azobis-2-methylbutyronitrile ( **11.6** g) as a polymerization initiator was dissolved into the obtained mixture to provide a solution. This solution was dropwise added to IBA (200 g, heated up to 105°C) over a period of 4 hours, and post-polymerized for 2 hours. Thereby, a (meth)acrylate ester polymer (polymer A-1) with a solids concentration of 60% was obtained. Table 1 shows the physical properties of the obtained polymer.

(Synthesis 2)

Methyl methacrylate (300 g), stearyl methacrylate (115 g), γ-methacryloxypropyltrimethoxysilane (46 g), γ-mercaptopropyltrimethoxysilane (37 g), and isobutyl alcohol (IBA, **200** g) were mixed, and azobis-2-methylbutyronitrile ( **11.6** g) as a polymerization initiator was dissolved into the obtained mixture to provide a solution. This solution was dropwise added to IBA (200 g, heated up to 105°C) over a period of 4 hours, and post-polymerized for 2 hours. Thereby, a (meth)acrylate ester polymer (polymer A-2) with a solids concentration of 60% was obtained. Table 1 shows the physical properties of the obtained polymer.

(Synthesis 3)

Methyl methacrylate (300 g), 2-ethylhexyl methacrylate (115 g), γ-methacryloxypropyltrimethoxysilane (88.9 g), n-dodecylmercaptane (37 g), and isobutyl alcohol (IBA, **200** g) were mixed, and azobis-2-methylbutyronitrile ( **11.6** g) as a polymerization initiator was dissolved into the obtained mixture to provide a solution. This solution was dropwise added to IBA (200 g, heated up to 105°C) over a period of 4 hours, and post-polymerized for 2 hours. Thereby, a (meth)acrylate ester polymer (polymer A-3) with a solids concentration of 60% was obtained. Table 1 shows the physical properties of the obtained polymer.

(Synthesis 4)

Methyl methacrylate (300 g), 2-ethylhexyl methacrylate (115 g), γ-methacryloxypropyltrimethoxysilane (73.7 g), n-dodecylmercaptane (37 g), and isobutyl alcohol, (IBA, **200** g) were mixed, and azobis-2-methylbutyronitrile ( **11.6** g) as a polymerization initiator was dissolved into the obtained mixture to provide a solution. This solution was dropwise added to IBA (200 g, heated up to 105°C) over a period of 4 hours, and post-polymerized for 2 hours. Thereby, a (meth)acrylate ester polymer (polymer A-4) with a solids concentration of 60% was obtained. Table 1 shows the physical properties of the obtained polymer.

(Synthesis 5)

Methyl methacrylate (300 g), 2-ethylhexyl methacrylate (115 g), γ-methacryloxypropyltrimethoxysilane (59.9 g), n-dodecylmercaptane (37 g), and isobutyl alcohol (IBA, **200** g) were mixed, and azobis-2-methylbutyronitrile ( **11.6** g) as a polymerization initiator was dissolved into the obtained mixture to provide a solution. This solution was dropwise added to IBA (200 g, heated up to 105°C) over a period of 4 hours, and post-polymerized for 2 hours. Thereby, a (meth)acrylate ester polymer (polymer A-5) with a solids concentration of 60% was obtained. Table 1 shows the physical properties of the obtained polymer.

(Synthesis 6)

Methyl methacrylate (300 g), 2-ethylhexyl methacrylate (115 g), γ-methacryloxypropyl trimethoxysilane (46 g), n-dodecylmercaptane (37 g), and isobutyl alcohol (IBA, **200** g) were mixed, and azobis-2-methylbutyronitrile ( **11.6** g) as a polymerization initiator was dissolved into the obtained mixture to provide a solution. This solution was dropwise added to IBA (200 g, heated up to 105°C) over a period of 4 hours, and post-polymerized for 2 hours. Thereby, a (meth)acrylate ester polymer (polymer A-6) with a solids concentration of 60% was obtained. Table 1 shows the physical properties of the obtained polymer.

(Synthesis 7)

Methyl methacrylate (300 g), 2-ethylhexyl methacrylate (115 g), γ-methacryloxypropylmethyldimethoxysilane (46 g), γ-mercaptopropylmethyldimethoxysilane (37 g), and isobutyl alcohol (IBA, **200** g) were mixed, and azobis-2-methylbutyronitrile ( **11.6** g) as a polymerization initiator was dissolved into the obtained mixture to provide a solution. This solution was dropwise added to IBA (200 g, heated up to 105°C) over a period of 4 hours, and post-polymerized for 2 hours. Thereby, a (meth)acrylate ester polymer (polymer A-7) with a solids concentration of 60% was obtained. Table 1 shows the physical properties of the obtained polymer.

[Table 1]

| | A-1 | A-2 | A-3 | A-4 | A-5 | A-6 | A-7 |
|---|---|---|---|---|---|---|---|
| Methyl methacrylate | 65 | 65 | 65 | 65 | 65 | 65 | 65 |
| 2-Ethylhoxyl methacrylate | 25 | - | 25 | 25 | 25 | 25 | 25 |
| Butyl acrylate | - | - | - | - | - | - | - |
| Stearyl methacrylate | - | 25 | - | - | - | - | - |
| γ-Methacryloxypropyltrimethoxysilane | 10 | 10 | 19.3 | 16 | 13 | 10 | - |
| γ-Methacryloxypropyl methyldimethoxysilane | - | - | - | - | - | - | 10 |
| γ-Mercaptopropyltrimethoxysilane | 8 | 8 | - | - | - | - | - |
| γ-Mercaptopropylmethyldimethoxysilane | - | - | - | - | - | - | 8 |
| n-Dodecyl mercaptane | - | - | 8 | 8 | 8 | 8 | - |
| **Azobis-2-methylbutyronitrile** | 2.5 | 2.5 | 2.5 | 2.5 | 2.5 | 2.5 | 2.5 |
| Isobutyl alcohol | 87 | 87 | 87 | 87 | 87 | 87 | 87 |
| Number of silicon functional group per molecule (per mole) | **1.61** | **1.76** | **1.49** | **1.27** | **1.06** | **0.80** | **1.50** |
| Tg | 44 | 36 | 44 | 44 | 44 | 44 | 43 |
| Mn | 2200 | 2400 | 2300 | 2300 | 2300 | 2200 | 1900 |
| Mw | 4000 | 4300 | 4100 | 4000 | 4000 | 3800 | 3400 |
| Mw/Mn | 1.8 | 1.8 | 1.8 | 1.8 | 1.8 | 1 7 | 1.8 |
| The amounts of the materials in "parts by weight" | | | | | | | |

(Synthesis 8)

Propylene oxide was polymerized in the presence of polyoxypropylene glycol having a number average molecular weight of about 2,000 as an initiator and a zinc hexacyanocobaltate glyme complex catalyst. Thereby, polyoxypropylene glycol having a molecular weight of 28,500 was prepared. Then, a solution of NaOMe in methanol was added in an amount of 1.2 equivalents to the amount of the hydroxy groups of this hydroxy-terminated polyoxypropylene glycol, and methanol was distilled off. Further, 3-chloro-1-propene was added, and thereby the terminal hydroxy groups were converted to allyl groups. Next, a platinum divinyldisiloxane complex (3 wt.% isopropanol solution calculated as platinum, 50 μl) was added to the obtained allyl-terminated polyoxypropylene (500 g), and then triethoxysilane (TES, 6.0 g) was slowly dropwise added thereto under stirring. The mixed solution was reacted for 2 hours at 90°C, and the unreacted TES was then distilled off under reduced pressure. Further, methanol (100 g) and HCl (12 ppm) were added, and thereby the terminal ethoxy groups were converted to methoxy groups. As a result, a reactive silyl group-containing polyoxypropylene polymer (B-1) was obtained which was terminated with a trimethoxysilyl group and had 1.3 silyl groups on average per molecule.

(Synthesis 9)

Propylene oxide was polymerized in the presence of polyoxypropylene triol having a number average molecular weight of about 3,000 as an initiator and a zinc hexacyanocobaltate glyme complex catalyst. Thereby, polyoxypropylene triol having a molecular weight of 26,000 was prepared. Then, a solution of NaOMe in methanol was added in an amount of 1.2 equivalents to the amount of the hydroxy groups of this hydroxy-terminated polyoxypropylene triol, and methanol was distilled off. Further, 3-chloro-1-propene was added, and thereby the terminal hydroxy groups were converted to allyl groups. Next, a platinum divinyldisiloxane complex (3 wt.% isopropanol solution calculated as platinum, 50 μl) was added to the obtained allyl-terminated polyoxypropylene (500 g), and then methyldimethoxysilane (DMS, 6.7 g) was slowly dropwise added thereto under stirring. The mixed solution was reacted for 2 hours at 90°C, and the unreacted DMS was then distilled off under reduced pressure. Thereby, a reactive silyl group-containing polyoxypropylene polymer (B-2) was obtained which was terminated with a methyldimethoxysilyl group and had 2.4 silyl groups on average per molecule.

(Synthesis 10)

Propylene oxide was polymerized in the presence of polyoxypropylene triol having a number average molecular weight of about 3,000 as an initiator and a zinc hexacyanocobaltate glyme complex catalyst. Thereby, polyoxypropylene triol having a molecular weight of 26,000 was prepared. Then, a solution of NaOMe in methanol was added in an amount of 1.2 equivalents to the amount of the hydroxy groups of this hydroxy-terminated polyoxypropylene triol, and methanol was distilled off. Further, 3-chloro-1-propene was added, and thereby the terminal hydroxy groups were converted to allyl groups. Next, a platinum divinyldisiloxane complex (3 wt.% isopropanol solution calculated as platinum, 50 μl) was added to the obtained allyl-terminated polyoxypropylene (500 g), and then triethoxysilane (TES, 8.5 g) was slowly dropwise added thereto under stirring. The mixed solution was reacted for 2 hours at 90°C, and the unreacted TES was then distilled off under reduced pressure. Further, methanol (100 g) and HCl (12 ppm) were added, and thereby the terminal ethoxy groups were converted to methoxy groups. As a result, a reactive silyl group-containing polyoxypropylene polymer (B-3) was obtained which was terminated with a trimethoxysilyl group and had 2.0 silyl groups on average per molecule.

(Synthesis 11)

Propylene oxide was polymerized in the presence of polyoxypropylene glycol having a number average molecular weight of about 2,000 as an initiator and a zinc hexacyanocobaltate glyme complex catalyst. Thereby, polyoxypropylene glycol having a molecular weight of 14,000 was prepared. Then, a solution of NaOMe in methanol was added in an amount of 1.2 equivalents to the amount of the hydroxy groups of this hydroxy-terminated polyoxypropylene glycol, and methanol was distilled off. Further, 3-chloro-1-propene was added, and thereby the terminal hydroxy groups were converted to allyl groups. Next, a platinum divinyldisiloxane complex (3 wt.% isopropanol solution calculated as platinum, 50 μl) was added to the obtained allyl-terminated polyoxypropylene (500 g), and then methyldimethoxysilane (DMS, 9.1 g) was slowly dropwise added thereto under stirring. The mixed solution was reacted for 2 hours at 90°C, and the unreacted DMS was then distilled off under reduced pressure. Thereby, a reactive silyl group-containing polyoxypropylene polymer (B-4) was obtained which was terminated with a methyldimethoxysilyl group and had 1.6 silyl groups on average per molecule.

(Synthesis 12)

Propylene oxide was polymerized in the presence of polyoxypropylene glycol having a number average molecular weight of about 2,000 as an initiator and a zinc hexacyanocobaltate glyme complex catalyst. Thereby, polyoxypropylene glycol having a molecular weight of 28,500 was prepared. Then, a solution of NaOMe in methanol was added in an amount of 1.2 equivalents to the amount of the hydroxy groups of this hydroxy-terminated polyoxypropylene glycol, and methanol was distilled off. Further, 3-chloro-1-propene was added, and thereby the terminal hydroxy groups were converted to allyl groups. Next, a platinum divinyldisiloxane complex (3 wt.% isopropanol solution calculated as platinum, 50 μl) was added to the obtained allyl-terminated polyoxypropylene (500 g), and then triethoxysilane (TES, 7.2 g) was slowly dropwise added thereto under stirring. The mixed solution was reacted for 2 hours at 90°C, and the unreacted TES was then distilled off under reduced pressure. Further, methanol (100 g) and HCl (12 ppm) were added, and thereby the terminal ethoxy groups were converted to methoxy groups. As a result, a reactive silyl group-containing polyoxypropylene polymer (B-5) was obtained which was terminated with a trimethoxysilyl group and had 1.6 silyl groups on average per molecule.

(Synthesis 13)

Propylene oxide was polymerized in the presence of polyoxypropylene glycol having a number average molecular weight of about 2,000 as an initiator and a zinc hexacyanocobaltate glyme complex catalyst. Thereby, polyoxypropylene glycol having a molecular weight of 14,000 was prepared. Then, a solution of NaOMe in methanol was added in an amount of 1.2 equivalents to the amount of the hydroxy groups of this hydroxy-terminated polyoxypropylene glycol, and methanol was distilled off. Further, 3-chloro-1-propene was added, and thereby the terminal hydroxy groups were converted to allyl groups. Next, a platinum divinyldisiloxane complex (3 wt.% isopropanol solution calculated as platinum, 50 μl) was added to the obtained allyl-terminated polyoxypropylene (500 g), and then triethoxysilane (TES, 11.5 g) was slowly dropwise added thereto under stirring. The mixed solution was reacted for 2 hours at 90°C, and the unreacted TES was then distilled off under reduced pressure. Further, methanol (100 g) and HCl (12 ppm) were added, and thereby the terminal ethoxy groups were converted to methoxy groups. As a result, a reactive silyl group-containing polyoxypropylene polymer (B-6) was obtained which was terminated with a trimethoxysilyl group and had 1.3 silyl groups on average per molecule.

(Synthesis 14)

Each of the (meth)acrylate ester polymer solutions (polymers A-1 to A-4) obtained in Syntheses 1 to 4 was uniformly mixed with one of the reactive silyl group-containing polyoxypropylenes B-1 to B-6 (60 parts) so that the amount (as solids) of the (meth)acrylate ester polymer was 40 parts. Then, IBA was distilled off with a rotary evaporator. Thus, acrylic/modified silicone resins (C-1 to C-9) were obtained.

(Synthesis 15)

The (meth)acrylate ester polymer solution (polymer A-1) obtained in Synthesis 1 was uniformly mixed with the reactive silyl group-containing polyoxypropylene B-1 (40 to 50 parts) so that the amount (as solids) of the (meth)acrylate ester polymer was 60 to 50 parts. Then, IBA was distilled off with a rotary evaporator, and thereby acrylic/modified silicone resins (C-10 and C-11) were obtained.

(Synthesis 16)

The (meth)acrylate ester polymer solution (polymer A-1) obtained in Synthesis 1 was uniformly mixed with the reactive silyl group-containing polyoxypropylene B-1 (70 parts) so that the amount (as solids) of the (meth)acrylate ester polymer was 30 parts. Then, IBA was distilled off with a rotary evaporator, and thereby an acrylic/modified silicone resin (C-12) was obtained.

(Comparative Synthesis 1)

The (meth) acrylate ester polymer solution (polymer A-1) obtained in Synthesis 1 was uniformly mixed with the reactive silyl group-containing polyoxypropylene B-1 (80 to 90 parts) so that the amount (as solids) of the (meth)acrylate ester polymer was 20 to 10 parts. Then, IBA was distilled off with a rotary evaporator, and thereby acrylic/modified silicone resins (C-13 and C-14) were obtained.

(Comparative Synthesis 2)

Each of the (meth) acrylate ester polymer solutions (polymers A-5, A-6, and A-7) obtained in Syntheses 5, 6, and 7 was uniformly mixed with the reactive silyl group-containing polyoxypropylene B-1 (60 parts) so that the amount (as solids) of the (meth)acrylate ester polymer was 40 parts. Then, IBA was distilled off with a rotary evaporator. Thus, acrylic/modified silicone resins (C-15 to C-17) were obtained.

[Table 2]

| | | Syntheses | | | | | | | | | | | | Comparative Syntheses | | | | |
|---|---|---|---|---|---|---|---|---|---|---|---|---|---|---|---|---|---|---|
| | | C-1 | C-2 | C-3 | C-4 l | C-5 | C-6 | C-7 | C-8 | C-9 | C-10 | C-11 | C-12 | C-13 | C-14 | C-15 | C-16 | C-17 |
| A | (A-1) | 40 | 40 | 40 | 40 | 40 | 40 | | | | 60 | 50 | 30 | 20 | 10 | | | |
| | (A-2) | | | | | | | 40 | | | | | | | | | | |
| | (A-3) | | | | | | | | 40 | | | | | | | | | |
| | (A-4) | | | | | | | | | 40 | | | | | | | | |
| | (A-5) | | | | | | | | | | | | | | | 40 | | |
| | (A-6) | | | | | | | | | | | | | | | | 40 | |
| | (A-7) | | | | | | | | | | | | | | | | | 40 |
| B | (B-1) | 60 | | | | | | 60 | 60 | 60 | 40 | 50 | 70 | 80 | 90 | 60 | 60 | 60 |
| | (B-2) | | 60 | | | | | | | | | | | | | | | |
| | (B-3) | | | 60 | | | | | | | | | | | | | | |
| | (B-4) | | | | 60 | | | | | | | | | | | | | |
| | (B-5) | | | | | 60 | | | | | | | | | | | | |
| | (B-6) | | | | | | 60 | | | | | | | | | | | |
| The amounts of the materials in "parts by weight" | | | | | | | | | | | | | | | | | | |

(Example 1)

Dibutyltin dilaurate (2.0 parts) was added to the acrylic/modified silicone resin (C-1) (100 parts). The mixture was charged into a polyethylene mold with no air bubble included therein, and cured for 3 days at 23°C and 50% RH, and then for 4 days at 50°C. Thereby, an about 3-mm-thick sheet was prepared. The sheet was punched out into a shape of the dumbbell No. 3, and subjected to a tensile strength test at 23°C and 50% RH. Thus, the 50% modulus, 100% modulus, and tensile strength at break were measured. The tensile strength was measured at a rate of pull of 200 mm/min with Autograph (AGS-J) produced by Shimadzu Corporation. Table 3 shows the results.

(Example 2)

Tin octylate (0.44 parts) and water (0.6 parts) were added to the acrylic/modified silicone resin (C-2) (100 parts). The mixture was charged into a polyethylene mold with no air bubble included therein, and cured for 3 days at 23°C and 50% RH, and then for 4 days at 50°C. Thereby, an about 3-mm-thick sheet was prepared. The sheet was punched out into a shape of the dumbbell No. 3, and subjected to a tensile strength test at 23°C and 50% RH. Thus, the 50% modulus, 100% modulus, and tensile strength at break were measured. The tensile strength was measured at a rate of pull of 200 mm/min with Autograph (AGS-J) produced by Shimadzu Corporation. Table 3 shows the results.

(Example 3)

Except that the acrylic/modified silicone resin (C-3) was used instead of the resin (C-1), the same process was performed as in Example 1. Table 3 shows the results.

(Example 4)

Except that the acrylic/modified silicone resin (C-4) was used instead of the resin (C-2), the same process was performed as in Example 2. Table 3 shows the results.

(Example 5)

Except that the acrylic/modified silicone resin (C-5) was used instead of the resin (C-1), the same process was performed as in Example 1. Table 3 shows the results.

(Example 6)

Except that the acrylic/modified silicone resin (C-7) was used instead of the resin (C-1), the same process was performed as in Example 1. Table 3 shows the results.

(Example 7)

Except that the acrylic/modified silicone resin (C-8) was used instead of the resin (C-1), the same process was performed as in Example 1. Table 3 shows the results.

(Example 8)

Except that the acrylic/modified silicone resin (C-9) was used instead of the resin (C-1), the same process was performed as in Example 1. Table 3 shows the results.

(Example 9)

Except that the acrylic/modified silicone resin (C-10) was used instead of the resin (C-1), the same process was performed as in Example 1. Table 3 shows the results.

(Example 10)

Except that the acrylic/modified silicone resin (C-11) was used instead of the resin (C-1), the same process was performed as in Example 1. Table 3 shows the results.

(Example 11)

Except that the acrylic/modified silicone resin (C-12) was used instead of the resin (C-1), the same process was performed as in Example 1. Table 3 shows the results.

(Comparative Example 1)

Except that the acrylic/modified silicone resin (C-13) was used instead of the resin (C-1), the same process was performed as in Example 1. Table 3 shows the results.

(Comparative Example 2)

Except that the acrylic/modified silicone resin (C-14) was used instead of the resin (C-1), the same process was performed as in Example 1. Table 3 shows the results.

(Comparative Example 3)

Except that the acrylic/modified silicone resin (C-15) was used instead of the resin (C-1), the same process was performed as in Example 1. Table 3 shows the results.

(Comparative Example 4)

Except that the acrylic/modified silicone resin (C-16) was used instead of the resin (C-1), the same process was performed as in Example 1. Table 3 shows the results.

(Comparative Example 5)

Except that the acrylic/modified silicone resin (C-17) was used instead of the resin (C-1), the same process was performed as in Example 1. Table 3 shows the results.

[Table 3]

| | | Examples | | | | | | | | | | | Comparative Examples | | | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 4 | 5 |
| Physical properties | M50 (MPa) | 0.48 | 1.31 | 0.54 | 0.80 | 0.56 | 0.48 | 0.38 | 0.21 | 2.92 | 1.20 | 0.25 | 0.17 | 0.15 | 0.15 | 0.09 | 0.13 |
| | M100 (MPa) | 2.30 | 3.61 | 1.81 | 27.5 | 2.52 | 1.93 | 1.90 | 0.63 | - | 6.42 | 0.60 | 0.28 | 0.23 | 0.27 | 0.15 | 0.21 |
| | TB (MPa) | 4.37 | 4.69 | 6.12 | 3.19 | 4.64 | 5.02 | 4.99 | 3.46 | 2.97 | 6.45 | 2.13 | 0.53 | 0.40 | 2.77 | 1.37 | 2.32 |

One having an M100 value of 0.5 MPa or higher was evaluated as a high-modulus one; one having a TB value of 2.0 MPa or higher was evaluated as a high-strength one; and one satisfying both of the physical property values was evaluated as a high-hardness one.

(Comparison of Examples 1, 9, 10, and 11 and Comparative Examples 1 and 2)

With respect to the weight ratio ((A)/(B)) between the polymer (A) and the polymer (B), it was found that the M100 value significantly increased from 0.23 to 0.28, 0.60, 2.30, 6.42, and 2.92 (M50) MPa as the weight ratio of the polymer A-1 to the polymer B-1 increased from 10/90 to 20/80, 30/70, 40/60, 50/50, and 60/40 (Comparative Example 2, Comparative Example 1, Example 11, Example 1, Example 10, and Example 9, respectively).

(Comparison of Examples 7 and 8 and Comparative Examples 3 and 4)

With respect to the amount of the silicon functional group in the polymer (A), the M100 value significantly increased from 0.15 to 0.27, 0.63, and 1.90 as the number of the silicon functional groups increased from **0.80** to **1.06, 1.27,** and **1.49** ( **moles**/mole) (Comparative Example 4, Comparative Example 3, Example 8, and Example 7, respectively).

(Comparison of Example 1 and Comparative Example 5)

The silicon functional group of the polymer (A-7) used in Comparative Example 5 was methyldimethoxysilane, and the only difference of Comparative Example 5 from Example 1 was the kind of the silicon functional group. However, the M100 modulus value was significantly reduced in Comparative Example 5 (Example 1: 2.30 MPa, Comparative Example 5: 0.21 MPa).

As shown in Table 3, the resins in Examples 1 to 11 achieved high modulus and high strength, while the resins in Comparative Examples 1 to 5, in each of which the (meth) acrylate ester polymer did not satisfy either the requirement of the weight ratio between the polymer (A) and the polymer (B), the amount of the trimethoxysilyl group, or the type of the silyl group, according to the present invention, showed low modulus or low strength, or showed both of the physical properties at low levels.

(Example 12)

Calcium carbonate (CCR, Shiraishi Kogyo Kaisha, Ltd., 50 parts), vinyltrimethoxysilane (3 parts), γ-(2-aminoethyl)aminopropyltrimethoxysilane (2 parts), and dibutyltin dilaurate (0.15 parts) were added to the acrylic/modified silicone resin (C-1) (100 parts) to provide a mixture. This mixture was applied at a thickness of 0.02 mm to an aluminum plate A-1050P (test sample with a size of 100 x 25 x 2 mm), an acrylic plate (test sample with a size of 100 x 25 x 2 mm), and an ABS resin plate (test sample with a size of 100 x 25 x 2 mm). Then, a cotton canvas (9th grade, 100 x 25 mm) was placed on each plate to adhere to it. The obtained substrate was cured for 3 days at 23°C and for 4 days at 50°C, and then the canvas was pulled in the direction of 180 degrees from the substrate. Here, the average value of peeling strength was determined and the condition of breakage was observed. Table 4 shows the results. The peeling strength was determined at a rate of pull of 200 mm/min with Autograph (AGS-J) produced by Shimadzu Corporation.

(Example 13)

Except that the acrylic/modified silicone resin (C-3) was used instead of the resin (C-1), the same process was performed as in Example 12. Table 4 shows the results.

(Example 14)

Except that the acrylic/modified silicone resin (C-5) was used instead of the resin (C-1), the same process was performed as in Example 12. Table 4 shows the results.

(Example 15)

Except that the acrylic/modified silicone resin (C-6) was used instead of the resin (C-1), the same process was performed as in Example 12. Table 4 shows the results.

[Table 4]

| | Polyoxyalkylene polymer | | | Evaluation of 180° peeling | | | | | |
| | | | | Aluminum | | Acrylic resin | | ABS resin | |
| | GPCMn | Number of terminals per molecule | Number of Si groups per molecule | Adhesiveness | Strength (N) | Adhesiveness | Strength (N) | Adhesiveness | Strength (N) |
|---|---|---|---|---|---|---|---|---|---|
| Example 12 | 28500 | 2 | 1.3 | A | 25.7 | A | 22.1 | A | 23.2 |
| Example 13 | 26000 | 3 | 2.0 | A | 32.1 | C | 16.9 | D | 6.45 |
| Example 14 | 28500 | 2 | 1.6 | A | 32.2 | A | 26.7 | D | 6.16 |
| Example 15 | 14000 | 2 | 1.3 | A | 10.7 | A | 10.8 | C | 8.28 |

The adhesiveness was evaluated as follows: a cohesive failure ratio of 80% or higher was evaluated as A; a cohesive failure ratio of 80 to 50% as B; a cohesive failure ratio of 50 to 10% as C; and a cohesive failure ratio of 10% or lower as D. The higher the cohesive failure ratio is, the better the adhesiveness is.

As shown in Table 4, a polymer (B) having a molecular weight of 21,000 or greater, two terminals per molecule, and 1.5 or less silyl groups per molecule was found to have excellent adhesiveness to a substrate.

INDUSTRIAL APPLICABILITY

The curable composition of the present invention may be suitably used in such applications as pressure-sensitive adhesives; sealants for uses such as buildings, ships, automobiles, and roads; adhesives; impression materials; vibration-proof materials; damping materials; soundproof materials; expanded/foamed materials; coating compositions; and spray coatings. Among these applications, the curable composition is more preferably used as sealants and adhesives because a cured product to be provided is excellent in flexibility and adhesiveness. The curable composition of the present invention may also be used in various applications such as electric and electronic part materials such as back-cover sealants for solar cells; electric insulating materials such as insulating cover materials for electric wires and cables; elastic adhesives; contact adhesives; spray sealants; crack repair materials; tiling adhesives; powdery coating compositions; casting materials; rubber materials for medical use; pressure-sensitive adhesives for medical use; sealants for medical devices; food packaging materials; joint sealants for siding boards and other exterior materials; coating materials; primers; electromagnetic-wave-shielding conductive materials and thermally conductive materials; hot melt materials; potting agents for electrics and electronics; films; gaskets; various molding materials; rustproof and waterproof sealants for wired glass and laminated-glass edges (cut end faces); and liquid sealants for use in automotive parts, electrical machinery parts, and various machinery parts.

Further, the curable composition may also be used as various sealing compositions and adhesive compositions because it, either alone or with the aid of a primer, may adhere to a wide range of substrates such as glass, ceramics, wood, metals, and molded resin products.

The curable composition of the present invention may also be used as interior panel adhesives, exterior panel adhesives, tiling adhesives, stone pitching adhesives, ceiling finishing adhesives, floor finishing adhesives, wall finishing adhesives, vehicle panel adhesives, adhesives for assembling electric, electronic and precision apparatuses, direct glazing sealants, double glazing sealants, sealants for SSG systems, and working joint sealants for buildings. In particular, a cured product obtained according to the present invention has high strength, and thus is particularly suitable for industrial sealants.

**Claims**

1.  A room temperature-curable composition, comprising:

    a (meth)acrylate ester polymer (A) having 1.27 or more silicon-containing functional groups of formula (1) on average per molecule and having an alkyl (meth)acrylate ester monomer unit in its molecular chain, the formula (1) being

    $$-SiX_3 \qquad (1)$$

    wherein X is a hydroxy group or a hydrolyzable group, and each of the three Xs may be the same as or different from each other; and

    a polyoxyalkylene polymer (B) having a silicon functional group represented by formula (2):

    $$-Si(R^1_{3-a})Y_a \qquad (2)$$

    wherein $R^1$ is a C1-C10 alkyl group, a C6-C10 aryl group, or a C7-C10 aralkyl group; Y is a hydroxy group or a hydrolyzable group; "a" is 1, 2, or 3; and if two or more $R^1$s or Ys are present, each of these may be the same as or different from each other,

    the curable composition containing the polymer (A) and the polymer (B) at a weight ratio of 30/70 to 90/10, wherein the (meth)acrylate ester polymer (A) has a Tg calculated by the following formula of 20°C to 100°C,

$$1/(Tg(K)) = \Sigma(Mi/Tgi)$$

wherein Mi is a weight fraction of a monomer i that is a structural unit of the polymer; and Tgi is a glass transition temperature (K) of a homopolymer of the monomer i.

2. The room temperature-curable composition according to claim 1,
wherein the polyoxyalkylene polymer (B) has a number average molecular weight determined by GPC of 5,000 to 500,000.

3. The room temperature-curable composition according to claim 1 or 2,
wherein "a" of the polyoxyalkylene polymer (B) is 2 or 3.

4. The room temperature-curable composition according to claim 3,
wherein X in the formula (1) is a methoxy group and Y in the formula (2) is a methoxy group.

5. The room temperature-curable composition according to any one of claims 1 to 4,
wherein the polyoxyalkylene polymer (B) is a linear polymer, has a number average molecular weight determined by GPC of 21,000 or greater, and has 1.5 or less silicon functional groups with "a" of 3 per molecule.

6. The room temperature-curable composition according to any one of claims 1 to 5,
wherein the polyoxyalkylene polymer (B) is obtained by the steps of: reacting a polyoxyalkylene polymer that has an alkenyl group with triethoxysilane; and converting its ethoxy group into a methoxy group.

7. The room temperature-curable composition according to any one of claims 1 to 6,
wherein the (meth)acrylate ester polymer (A) has a number average molecular weight determined by GPC of 500 to 500,000.

8. The room temperature-curable composition according to any one of claims 1 to 7,
wherein the (meth)acrylate ester polymer (A) is a copolymer of an alkyl (meth)acrylate ester monomer unit (a-1) having a C1-C2 alkyl group and an alkyl (meth)acrylate ester monomer unit (a-2) having a C7-C9 alkyl group at a weight ratio (a-1/a-2) of 60/40 to 90/10.

9. A cured product of the curable composition according to any one of claims 1 to 8.


**Patentansprüche**

1. Bei Raumtemperatur aushärtbare Zusammensetzung, umfassend:

ein (Meth)acrylatesterpolymer (A), das durchschnittlich 1,27 oder mehr Silicium-haltige funktionelle Gruppen der Formel (1) pro Molekül und eine Alkyl(meth)acrylatestermonomereinheit in seiner Molekülkette aufweist, wobei die Formel (1) lautet:

$$-SiX_3 \qquad (1)$$

wobei X eine Hydroxylgruppe oder eine hydrolysierbare Gruppe ist und alle drei Xs einander gleich oder voneinander verschieden sein können, und

ein Polyoxyalkylenpolymer (B) mit einer Silicium-haltigen funktionellen Gruppe, die durch Formel (2) dargestellt wird:

$$-Si(R^1_{3-a})Y_a \qquad (2)$$

wobei $R^1$ eine C1-C10-Alkylgruppe, eine C6-C10-Arylgruppe oder eine C7-C10-Aralkylgruppe ist, Y eine Hydroxylgruppe oder eine hydrolysierbare Gruppe ist, "a" 1, 2 oder 3 beträgt, und wenn zwei oder mehr $R^1$ s oder Ys vorhanden sind, jedes davon miteinander gleich oder voneinander verschieden sein kann,

wobei die härtbare Zusammensetzung das Polymer (A) und das Polymer (B) in einem Gewichtsverhältnis von 30/70 bis 90/10 enthält,
wobei das (Meth)acrylatesterpolymer (A) bei 20 °C bis 100 °C eine mit folgender Formel berechnete Tg aufweist:

$$1/(Tg(K)) = \Sigma \ (Mi/Tgi)$$

wobei Mi eine Gewichtsfraktion eines Monomers i ist, das eine Struktureinheit des Polymers ist, und Tgi eine Glasübergangstemperatur (K) eines Homopolymers aus Monomer i ist.

2. Bei Raumtemperatur härtbare Zusammensetzung nach Anspruch 1,
wobei das Polyoxyalkylenpolymer (B) ein durch GPC bestimmtes Zahlenmittel des Molekulargewichts von 5.000 bis 500.000 aufweist.

3. Bei Raumtemperatur härtbare Zusammensetzung nach Anspruch 1 oder 2, wobei "a" des Polyoxyalkylenpolymers (B) 2 oder 3 beträgt.

4. Bei Raumtemperatur härtbare Zusammensetzung nach Anspruch 3,
wobei X in der Formel (1) eine Methoxygruppe ist und Y in der Formel (2) eine Methoxygruppe ist.

5. Bei Raumtemperatur härtbare Zusammensetzung nach einem der Ansprüche 1 bis 4,
wobei das Polyoxyalkylenpolymer (B) ein lineares Polymer ist, ein durch GPC bestimmtes Zahlenmittel des Molekulargewichts von 21.000 oder mehr aufweist und pro Molekül 1,5 oder weniger Silicium-haltige funktionelle Gruppe mit "a" gleich 3 aufweist.

6. Bei Raumtemperatur härtbare Zusammensetzung nach einem der Ansprüche 1 bis 5,
wobei das Polyoxyalkylenpolymer (B) erhalten wird durch die Schritte: Reagieren eines eine Alkylengruppe enthaltenden Polyoxyalkylenpolymers mit Triethoxysilan und Umwandeln von dessen Ethoxygruppe in eine Methoxygruppe.

7. Bei Raumtemperatur härtbare Zusammensetzung nach einem der Ansprüche 1 bis 6,
wobei das (Meth)acrylatesterpolymer (A) ein durch GPC bestimmtes Zahlenmittel des Molekulargewichts von 500 bis 500.000 aufweist.

8. Bei Raumtemperatur härtbare Zusammensetzung nach einem der Ansprüche 1 bis 7,
wobei das (Meth)acrylatesterpolymer (A) ein Copolymer aus einer Alkyl(meth)acrylatestermonomereinheit (a-1) mit einer C1-C2-Alkylgruppe und einer Alkyl(meth)acrylatestermonomereinheit (a-2) mit einer C7-C9-Alkylgruppe in einem Gewichtsverhältnis (a-1/a-2) von 60/40 bis 90/10 ist.

9. Ausgehärtetes Produkt aus der härtbaren Zusammensetzung nach einem der Ansprüche 1 bis 8.

**Revendications**

1. Composition durcissable à température ambiante, comprenant :

un polymère d'ester (méth)acrylate (A) ayant 1,27 ou plus groupes fonctionnels contenant du silicium de formule (1) en moyenne par molécule et ayant une unité monomère d'ester (méth)acrylate d'alkyle dans sa chaîne moléculaire, la formule (1) étant

$$-SiX_3 \qquad (1)$$

où X est un groupe hydroxy ou un groupe hydrolysable, et les trois X peuvent être chacun identiques ou différents les uns des autres ; et

un polymère de polyoxyalkylène (B) ayant un groupe fonctionnel au silicium représenté par la formule (2) :

$$-Si(R^1_{3-a})Y_a \qquad (2)$$

où $R^1$ est un groupe C1-C10 alkyle, un groupe C6-C10 aryle ou un groupe C7-C10 aralkyle ; Y est un groupe hydroxy ou un groupe hydrolysable ; "a" est 1, 2 ou 3 ; et si deux ou plusieurs $R^1$ ou Y sont présents, ceux-ci peuvent être chacun identiques ou différents les uns des autres,

la composition durcissable contenant le polymère (A) et le polymère (B) à un rapport en poids de 30/70 à 90/10, où le polymère d'ester (méth)acrylate (A) a une Tg calculée par la formule suivante de 20°C à 100°C,

$$1/(Tg(K)) = \Sigma(Mi/Tgi)$$

où Mi est une fraction en poids d'un monomère i qui est une unité structurale du polymère ; et Tgi est une température de transition vitreuse (K) d'un homopolymère du monomère i.

2. Composition durcissable à température ambiante selon la revendication 1, où le polymère de polyoxyalkylène (B) a une masse moléculaire moyenne en nombre déterminée par CPG de 5 000 à 500 000.

3. Composition durcissable à température ambiante selon la revendication 1 ou 2, où "a" du polymère de polyoxyalkylène (B) est 2 ou 3.

4. Composition durcissable à température ambiante selon la revendication 3, où X dans la formule (1) est un groupe méthoxy et Y dans la formule (2) est un groupe méthoxy.

5. Composition durcissable à température ambiante selon l'une quelconque des revendications 1 à 4, où le polymère de polyoxyalkylène (B) est un polymère linéaire, a une masse moléculaire moyenne en nombre déterminée par CPG de 21 000 ou plus, et a 1,5 ou moins groupe fonctionnel au silicium avec "a" de 3 par molécule.

6. Composition durcissable à température ambiante selon l'une quelconque des revendications 1 à 5, où le polymère de polyoxyalkylène (B) est obtenu par les étapes de : réaction d'un polymère de polyoxyalkylène qui a un groupe alcényle avec le triéthoxysilane ; et conversion de son groupe éthoxy en un groupe méthoxy.

7. Composition durcissable à température ambiante selon l'une quelconque des revendications 1 à 6, où le polymère d'ester (méth)acrylate (A) a une masse moléculaire moyenne en nombre déterminée par CPG de 500 à 500 000.

8. Composition durcissable à température ambiante selon l'une quelconque des revendications 1 à 7, où le polymère d'ester (méth)acrylate (A) est un copolymère d'une unité monomère d'ester (méth)acrylate d'alkyle (a-1) ayant un groupe C1-C2 alkyle et d'une unité monomère d'ester (méth)acrylate d'alkyle (a-2) ayant un groupe C7-C9 alkyle à un rapport en poids (a-1/a-2) de 60/40 à 90/10.

9. Produit durci de la composition durcissable selon l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0742376 B
- JP S61197631 A
- JP S61215622 A
- JP S61215623 A
- JP S61218632 A
- JP S4627250 B
- JP S5915336 B
- JP H0953063 A
- JP 2001115142 A
- JP H05117521 A
- JP H07258534 A
- JP H06279693 A
- JP H11349916 A
- JP 2003155389 A
- JP H04283259 A
- JP H09194731 A
- JP H0469659 B
- JP H07108928 B
- JP S63254149 A
- JP S6422904 A
- JP 2001072854 A